# EUROPEAN PATENT APPLICATION

(11) **EP 4 160 506 A1**
(43) Date of publication of application: **05.04.2023**
(21) Application number: 21812869.2
(22) Date of filing: 23.05.2021
(51) Int. Cl.: G06Q 30/02, G06Q 50/10

(54) **ADVERTISEMENT SERVICE SYSTEM FOR PROVIDING ADVERTISEMENT FOR LOCAL SIGNAGE AND USER TERMINAL BY USING SIGNAGE CONTENT AND EXPANDED CONTENT**

(30) Priority: 25.05.2020 KR 20200062701
(71) Applicant: Altsoft. Inc., Seoul 06097 (KR)
(72) Inventor: KIM, Chan Hong, Seoul 06097 (KR)
(74) Representative: M. Zardi & Co S.A.
(86) International application number: PCT/KR2021/006387
(87) International publication number: WO 2021/241948

(57) **Abstract**

According to an advertisement service system, proposed in the present disclosure, for providing an advertisement to a local signage and a user terminal by using signage content and expanded content, the expanded content resulting from expansion for the user terminal is constructed by adding additional content to the signage content, and the signage content is provided to the local signage and the expanded content is provided to the user terminal. Accordingly, already produced signage content is used, so the use of the signage content produced at a high cost can be expanded, and providing the expanded content appropriate for the user terminal can appeal to the user and increase advertising effects. Furthermore, even after an advertising period with respect to the local signage ends, continuous advertising effects can be obtained using the expanded content.

## Description

### Technical Field

The present disclosure relates to an advertisement service system and, more particularly, to an advertisement service system for providing an advertisement to a local signage and a user terminal by using signage content and expanded content.

### Background Art

In general, a digital signage refers to a service that provides users with advertisements as well as various types of information, such as news, daily life information, disaster information, etc., by using fixed screens installed at outdoors, public places, markets, etc. or by using mobile screens provided at various transportation means.

Compared to conventional media such as TVs or newspapers, the signage is known to be able to provide more effective advertising effects for a large number of unspecified customers. In particular, the signage can be seen in places with a large transient population, such as subway stations, bus stops, apartment elevators, banks, etc., and has been currently used to expose banner advertisements or video advertisements.

Advertisements for the signage can attract attention even in environments where people pass by, and are produced in an optimized form at high costs in order to provide key information for a short time.

In the meantime, recently, with the development of smart devices and wireless communication technology, consumption of advertisement content focusing on smartphones has replaced conventional PCs. Accordingly, a mobile advertisement content service using a smartphone capable of high-speed wireless communication has been provided. In particular, using mobile devices has an advantage in that detailed advertisement information can be provided over a network regardless of user location.

However, advertisements produced for signage output are too simple to be provided to mobile devices, etc., and lack specific information, so it is difficult to appeal to users. Therefore, in order to advertise on mobile devices, new content needs to be produced, so additional advertising production costs are required. In addition, the use of a signage advertisement produced at a high cost is limited and the signage advertisement is not fully utilized, and since the signage advertisement is provided only for a limited contract period, the signage advertisement is not utilized after the contract period ends.

In the meantime, as a related art of the present disclosure, Korean Patent No. 10-1936936 (title of the invention: ADVERTISEMENT SERVICE SYSTEM FOR SIMULTANEOUSLY PROVIDING ADVERTISEMENTS TO LOCAL SIGNAGE AND USER DEVICE ACCORDING TO REFERENCE REGIONS, registration date: January 03, 2019) was proposed.

### Disclosure

### Technical Problem

The present disclosure has been made keeping in mind the above problems occurring in the previously proposed methods, and the present disclosure is directed to providing an advertisement service system for providing an advertisement to a local signage and a user terminal by using signage content and expanded content, the expanded content resulting from expansion for the user terminal is constructed by adding the additional content to the signage content, and the signage content is provided to the local signage and the expanded content is provided to the user terminal. Accordingly, already produced signage content is used, so the use of the signage content produced at a high cost can be expanded, and providing the expanded content appropriate for the user terminal can appeal to the user and increase advertising effects. Furthermore, even after an advertising period with respect to the local signage ends, continuous advertising effects can be obtained using the expanded content.

### Technical Solution

In order to achieve the above objectives, according to an aspect of the present disclosure, there is provided an advertisement service system for providing an advertisement to a local signage and a user terminal by using signage content and expanded content,
the advertisement service system for providing the advertisement including:
a service providing server configured to provide the advertisement to the local signage and the user terminal,
wherein the service providing server includes:
a database module configured to store therein the signage content produced for the signage to be displayed as the advertisement on the local signage;
a first advertising module configured to provide the signage content stored in the database module to the local signage;
a content expansion module configured to construct the expanded content resulting from expansion for the user terminal, the expanded content including the signage content and further including additional content; and
a second advertising module configured to provide the user terminal with the expanded content constructed by the content expansion module, corresponding to an advertisement request of the user terminal.

Preferably, the database module is configured to
set and store therein a location of the local signage on which the signage content is to be displayed, a place name, and a keyword as tags in the signage content.

Preferably, the content expansion module is configured to
convert a size or a format or both of the signage content to provide the signage content to the user terminal, and construct the expanded content that uses the signage content resulting from conversion as representative content.

More preferably, the content expansion module is configured to
construct the expanded content by using the signage content as the representative content and by further including the additional content that includes at least one selected from a group of text, an image, a video, sound, and haptic feedback associated with the signage content.

Preferably, the content expansion module is configured to
construct the expanded content by using the signage content as the representative content and further including the additional content, wherein at least one piece of the expanded content is constructed using one piece of the signage content according to the additional content.

Preferably, the second advertising module includes:
an advertisement request receiving part configured to receive, from the user terminal, the advertisement request together with location information and/or a search keyword;
a content search part configured to use the location information and/or the search keyword received by the advertisement request receiving part to search the database module for the signage content matched to the location information and the search keyword; and
an advertisement providing part configured to provide the user terminal with the expanded content including the signage content found by the content search part.

More preferably, the second advertising module further includes
an advertisement request analysis part configured to analyze the advertisement request of the user terminal received by the advertisement request receiving part.

More preferably, the advertisement providing part is configured to
provide an analysis result of the advertisement request analysis part to the content expansion module, and request the content expansion module to construct the expanded content that includes the signage content found by the content search part as the representative content and further includes the additional content according to the analysis result, and receive, from the content expansion module, the expanded content constructed according to the request and provide the expanded content to the user terminal.

More preferably, the second advertising module further includes
a priority setting part configured to set priorities of the respective pieces of the expanded content that includes the signage content found by the content search part as the representative content, and
the advertisement providing part is configured to
arrange the pieces of the expanded content according to the priorities set by the priority setting part, and provide the pieces of the expanded content to the user terminal.

### Advantageous Effects

According to the advertisement service system, proposed in the present disclosure, for providing an advertisement to the local signage and the user terminal by using the signage content and the expanded content, the expanded content resulting from expansion for the user terminal is constructed by adding the additional content to the signage content, and the signage content is provided to the local signage and the expanded content is provided to the user terminal. Accordingly, already produced signage content is used, so the use of the signage content produced at a high cost can be expanded, and providing the expanded content appropriate for the user terminal can appeal to the user and increase advertising effects. Furthermore, even after an advertising period with respect to the local signage ends, continuous advertising effects can be obtained using the expanded content.

### Description of Drawings

FIG. 1 is a diagram illustrating a configuration of an advertisement service system for providing an advertisement to a local signage and a user terminal by using signage content and expanded content according to an embodiment of the present disclosure.
FIG. 2 is a diagram illustrating the use of signage content in the related art.
FIG. 3 is a diagram illustrating the use of content in an advertisement service system for providing an advertisement to a local signage and a user terminal by using signage content and expanded content according to an embodiment of the present disclosure.
FIG. 4 is a diagram illustrating a detailed configuration of a service providing server in the advertisement service system for providing an advertisement to a local signage and a user terminal by using signage content and expanded content according to an embodiment of the present disclosure.
FIG. 5 is a diagram illustrating an example of a configuration of expanded content of a content expansion module of the service providing server in the advertisement service system for providing an advertisement to a local signage and a user terminal by using signage content and expanded content according to an embodiment of the present disclosure.
FIG. 6 is a diagram illustrating an example of tags of signage content and expanded content in the advertisement service system for providing an advertisement to a local signage and a user terminal by using the signage content and the expanded content according to an embodiment of the present disclosure.
FIG. 7 is a diagram illustrating a detailed configuration of a second advertising module in the advertisement service system for providing an advertisement to a local signage and a user terminal by using signage content and expanded content according to an embodiment of the present disclosure.
FIG. 8 is a diagram illustrating a state in which expanded content is provided to a user terminal in the advertisement service system for providing an advertisement to a local signage and a user terminal by using signage content and expanded content according to an embodiment of the present disclosure

### <Description of the Reference Numerals in the Drawings>

100: Service providing server
110: Database module
120: First advertising module
130: Content expansion module
140: Second advertising module
141: Advertisement request receiving part
142: Content search part
143: Advertisement providing part
144: Advertisement request analysis part
145: Priority setting part
200: Local signage
300: User terminal

### Best Mode

Hereinafter, preferred embodiments of the present disclosure will be described in detail with reference to the accompanying drawings such that the present disclosure can be easily embodied by those skilled in the art to which the present disclosure belongs. However, in describing the preferred embodiments of the present disclosure in detail, if it is decided that a detailed description of the known function or configuration related to the present disclosure makes the subject matter of the present disclosure unclear, the detailed description will be omitted. In addition, throughout the drawings, the same reference numerals are used for parts having similar functions and operations.

Throughout the specification, when a part is referred to as being 'connected' to another part, it includes not only being 'directly connected', but also being `indirectly connected' by interposing the other part therebetween. In addition, when a part 'includes' an element, this means that it further includes other elements, but does not exclude other elements, unless specifically stated otherwise.

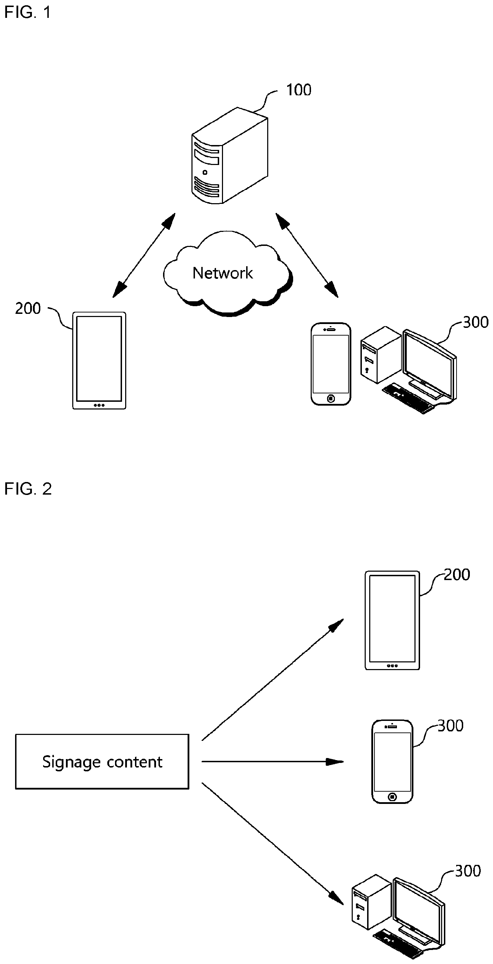

FIG. 1 is a diagram illustrating a configuration of an advertisement service system for providing an advertisement to a local signage 200 and a user terminal 300 by using signage content and expanded content according to an embodiment of the present disclosure. As shown in FIG. 1, the advertisement service system for providing an advertisement to the local signage 200 and the user terminal 300 by using the signage content and the expanded content according to the embodiment of the present disclosure may include a service providing server 100, and may further include the local signage 200 and the user terminal 300.

The service providing server 100 may be a server that provides an advertisement to the local signage 200 and the user terminal 300. Herein, the providing of the advertisement to the local signage 200 and the user terminal 300 by the service providing server 100 means that data of the advertisement to be output to the local signage 200 and the user terminal 300 is transmitted over a network. The data of the advertisement may be data including at least one selected from the group of text, an image, sound, a video, and multimedia. Examples of the advertisement may include general commercial advertisements as well as advertising information, article information, public information, etc.

In addition, the network may be realized as a wired network, such as a local area network (LAN), a wide area network (WAN), or a value-added network (VAN), or any type of wireless network, such as a mobile radio communication network, a satellite network, Bluetooth, a wireless broadband internet (Wibro), High Speed Downlink Packet Access (HSDPA), Long-Term Evolution (LTE), 5th generation mobile telecommunication (5G), etc.

The local signage 200 is a digital device including a display part for outputting an advertisement, and may be installed at a particular location and output the advertisement received from the service providing server 100. Furthermore, the local signage 200 may display an advertisement of one advertiser, or may display advertisements of a plurality of advertisers at predetermined time intervals. The local signage 200 may divide the display part to output several advertisements simultaneously, or may be linked to a plurality of the local signages 200 installed nearby to output a large-sized advertisement using the plurality of the local signages 200.

In the meantime, the local signage 200 may be managed by an operator of the service providing server 100, or may perform advertisement relaying by receiving signage information from a manager of the local signage 200.

The user terminal 300 is a device that makes an advertisement request to the service providing server 100, receives advertisement content in response to the advertisement request, and outputs the advertisement content. The user terminal 300 may be realized as a mobile device or various electronic devices, such as a personal computer, etc.

The electronic devices may include at least one of the following: a smartphone, a tablet personal computer (PC), a mobile phone, a video phone, an e-book reader, a desktop PC, a laptop PC, a netbook computer, a workstation, a server, a personal digital assistant (PDA), a media box, a game console, an electronic dictionary, and a wearable device. Examples of the wearable device may include at least one of the following: an accessory type (e.g., a watch, ring, bracelet, anklet, necklace, glasses, contact lens, or a head-mounted device (HMD)), a fabric or clothing-integrated type (e.g., electronic clothing), a body-attachable type (e.g., a skin pad or tattoo), and an implantable circuit. In various embodiments, the electronic devices are not limited to the aforementioned devices, and may be a combination of two or more of the aforementioned various devices.

That is, examples of the user terminal 300 are not limited to the above-described types of electronic devices, and may include any devices capable of transmitting and receiving data to and from the service providing server 100 over the network and outputting an advertisement through a display part, regardless of specific types of the devices.

FIG. 2 is a diagram illustrating the use of signage content in the related art. As shown in FIG. 2, in the related art, when an advertisement is provided to both a local signage 200 and a user terminal 300, already produced signage content is provided as the advertisement to the local signage 200 and the user terminal 300, such as a mobile device or a PC.

However, the signage content is intended to catch a passerby's eye and provide an advertisement quickly. Therefore, the signage content is too simple to be provided to a mobile device, etc., and lacks specific information, and providing the signage content as it is to the user terminal 300 cannot appeal to the user and has a limitation that advertising effects are reduced.

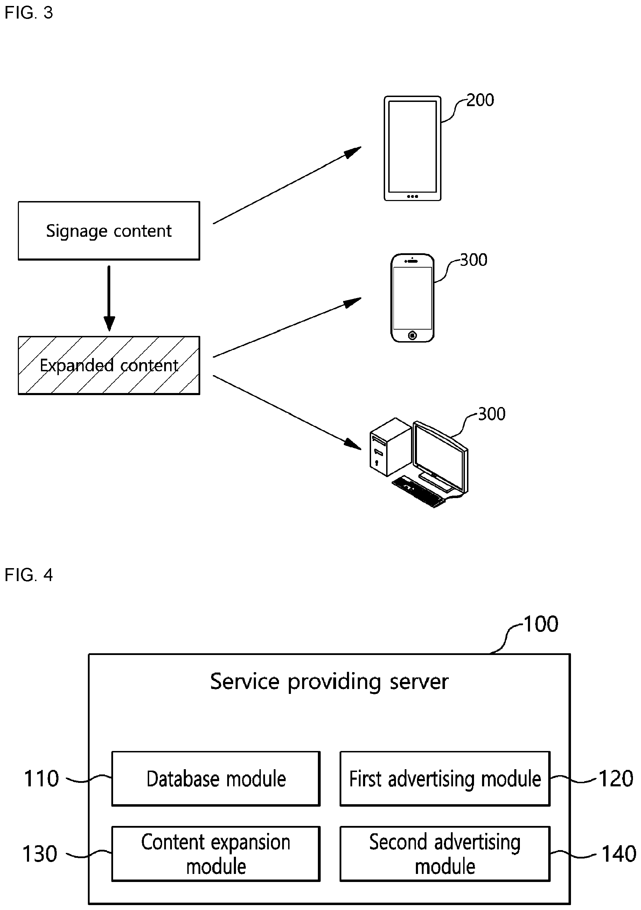

FIG. 3 is a diagram illustrating the use of content in an advertisement service system for providing an advertisement to a local signage 200 and a user terminal 300 by using signage content and expanded content according to an embodiment of the present disclosure. As shown in FIG. 3, the advertisement service system for providing an advertisement to the local signage 200 and the user terminal 300 by using the signage content and the expanded content according to the embodiment of the present disclosure may construct the expanded content, which includes the signage content and further includes additional content, resulting from expansion for the user terminal 300, and provides the signage content to the local signage 200 and the expanded content to the user terminal 300 as an advertisement, thereby solving the above-described limitation of the signage content and using the signage content efficiently.

In addition, an advertising space of the local signage 200 is limited, so an advertising period is determined. That is, when a contract period for advertising ends, the signage content can no longer be used and advertising effects cannot be obtained. However, the advertisement provided to the user terminal 300 may be continuously searched for and exposed without a fixed period, so that an advertising period and advertising effects can be greatly improved using the expanded content and the produced signage content can be continuously used.

FIG. 4 is a diagram illustrating a detailed configuration of the service providing server 100 in the advertisement service system for providing an advertisement to the local signage 200 and the user terminal 300 by using the signage content and the expanded content according to an embodiment of the present disclosure. As shown in FIG. 4, in the advertisement service system for providing an advertisement to the local signage 200 and the user terminal 300 by using the signage content and the expanded content according to the embodiment of the present disclosure, the service providing server 100 may include a database module 110, a first advertising module 120, a content expansion module 130, and a second advertising module 140.

The database module 110 may store therein signage content produced for a signage to be displayed as an advertisement on the local signage 200. Herein, the signage content is to be output to the local signage 200, and may be data including at least one selected from the group of text, an image, sound, a video, and multimedia. In general, the signage content may be in the form of an image, a video, etc.

In addition, the database module 110 may set and store therein the location of the local signage 200 on which the signage content is to be displayed, a place name, and a keyword as tags in the signage content. One piece of signage content may be output to a plurality of the local signages 200, so at least one location may be set as a tag. Furthermore, the signage content may further include, as tags, a region including the local signages 200 on which the signage content is to be output, and place names such as the names of nearby regions. For example, when the signage content is output to a local signage 200 installed inside Samseong Station, the specific location of the local signage 200 as well as the names of places, such as Samseong Station, Samseong, COEX, Gangnam, etc., may be included as tags. In addition, advertisement keywords may be set as tags according to the characteristics of the signage content. For example, keywords, such as a famous restaurant, a restaurant, a popular place, a cafe, a cake, etc., related to the matter advertised in the signage content may be set as tags.

The first advertising module 120 may provide the signage content stored in the database module 110 to the local signage 200. That is, the first advertising module 120 is an element for providing the signage content to the local signage 200. According to a location tag stored in the database module 110, the first advertising module 120 may provide data of the signage content to the corresponding local signage 200 so that an advertisement is displayed.

The local signage 200 may keep outputting one piece of signage content provided from the first advertising module 120. Alternatively, the local signage 200 may output multiple advertisements by rotating the same at predetermined time intervals, or may output a plurality of advertisements simultaneously by dividing the display part.

The content expansion module 130 may construct the expanded content resulting from expansion for the user terminal 300, wherein the expanded content includes the signage content and further includes the additional content. That is, the content expansion module 130 may construct the expanded content in the form suitable for the user terminal 300, such as a mobile device or a PC, by adding the additional content while using the signage content.

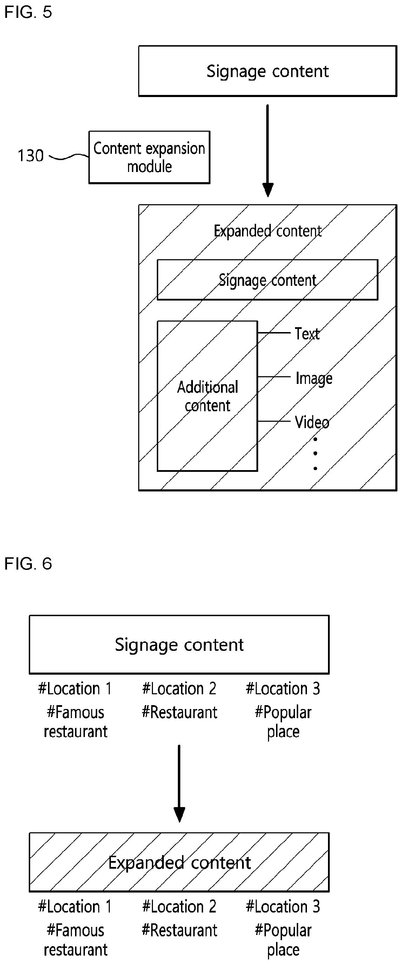

FIG. 5 is a diagram illustrating an example of a configuration of the expanded content of the content expansion module 130 of the service providing server 100 in the advertisement service system for providing an advertisement to the local signage 200 and the user terminal 300 by using the signage content and the expanded content according to an embodiment of the present disclosure. As shown in FIG. 5, in the advertisement service system for providing an advertisement to the local signage 200 and the user terminal 300 by using the signage content and the expanded content according to the embodiment of the present disclosure, the content expansion module 130 may produce the expanded content for the user terminal 300, the expanded content including the signage content and the additional content.

The content expansion module 130 may construct the expanded content by using the signage content as representative content and by further including the additional content that includes at least one selected from the group of text, an image, a video, sound, and haptic feedback associated with the signage content. For example, the expanded content may be constructed by using the signage content as the representative content, such as a thumbnail, and by using, as the additional content, text describing the signage content or the details of business of the advertiser, an image, or a link. The constructed expanded content may have various forms, such as a combination of various types of content, a post or bulletin, an article, an announcement, and one image or video resulting from conversion by combining several pieces of contents.

More specifically, the content expansion module 130 may construct the expanded content by using the signage content as representative content and further including the additional content, wherein the content expansion module 130 may construct at least one piece of expanded content by using one piece of signage content according to the additional content. That is, the content expansion module 130 may construct a plurality of pieces of the expanded content according to the matter or type of the additional content, and may construct the expanded content in various forms, such as a bulletin for selling products, a promotional material, a post or bulletin, card news, an article, an announcement, a video, etc.

In the meantime, the content expansion module 130 may convert the size or format or both of the signage content to provide the signage content to the user terminal 300, and may construct the expanded content that uses the signage content resulting from conversion as representative content. That is, the signage content output to the local signage 200 may be constructed as a large-sized and highresolution video in accordance with a large-sized local signage 200, so the size, volume, format, etc. may not be appropriate for the user terminal 300. Therefore, the content expansion module 130 may convert and use the signage content, for example, reducing the size or volume, lowering the resolution, or changing the format.

In the meantime, the database module 110 may store therein the signage content with the tags attached. The tags attached to the signage content may remain attached to the expanded content constructed by the content expansion module 130, and the constructed expanded content and the tags may be stored in the database module 110.

FIG. 6 is a diagram illustrating an example of tags of the signage content and the expanded content in the advertisement service system for providing an advertisement to the local signage 200 and the user terminal 300 by using the signage content and the expanded content according to an embodiment of the present disclosure. As shown in FIG. 6, in the advertisement service system for providing an advertisement to the local signage 200 and the user terminal 300 by using the signage content and the expanded content according to the embodiment of the present disclosure, the expanded content constructed by the content expansion module 130 may include the location and keyword tags attached to the signage content as they are.

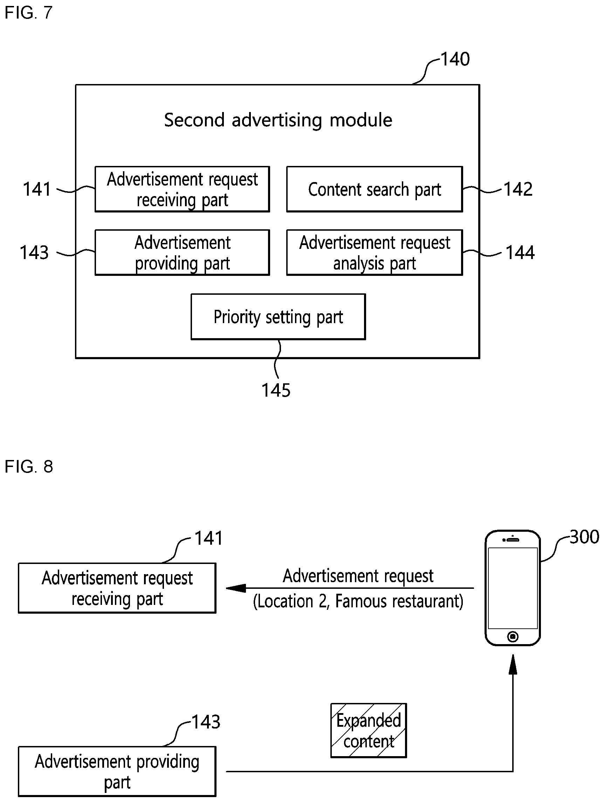

The second advertising module 140 may provide the user terminal 300 with the expanded content constructed by the content expansion module 130, in response to an advertisement request of the user terminal 300. Hereinafter, a detailed configuration of the second advertising module 140 will be described in detail with reference to FIG. 7.

FIG. 7 is a diagram illustrating the detailed configuration of the second advertising module 140 in the advertisement service system for providing an advertisement to the local signage 200 and the user terminal 300 by using the signage content and the expanded content according to an embodiment of the present disclosure. As shown in FIG. 7, in the advertisement service system for providing an advertisement to the local signage 200 and the user terminal 300 by using the signage content and the expanded content according to the embodiment of the present disclosure, the second advertising module 140 may include an advertisement request receiving part 141, a content search part 142, and an advertisement providing part 143, and may further include an advertisement request analysis part 144 and a priority setting part 145.

The advertisement request receiving part 141 may receive, from the user terminal 300, an advertisement request together with location information and/or a search keyword. Herein, the advertisement request may be received from the user terminal 300 by the advertisement request receiving part 141 when an event in which the user enters a search word for search and an event in which an application is executed and location information of the user terminal 300 is transmitted occur in the user terminal 300.

In the meantime, the location information received by the advertisement request receiving part 141 may be the location of the user terminal 300 using a GPS module of the user terminal 300, or may be location information or a place name included in a search word that the user inputs for search, or may be location information set by the user in a terminal, such as a PC, a website, or an application. In addition, the search keyword may be a keyword extracted from the search word input by the user, a keyword set by the user in a website or application, a keyword frequently used, or a keyword set according to the user's sex, age, Interest, etc.

The content search part 142 may use the location information and/or the search keyword received by the advertisement request receiving part 141 to search the database module 110 for the signage content matched to the location information and/or the search keyword. More specifically, the content search part 142 may use the tags attached to the signage content to search for the signage content matched to the advertisement request of the user terminal 300.

The advertisement providing part 143 may provide the user terminal 300 with the expanded content including the signage content found by the content search part 142. Herein, the expanded content may be stored in the database module 110, so the stored expanded content may be immediately provided to the user terminal 300. According to an embodiment, the content expansion module 130 may be requested to construct the expanded content, and a new constructed expanded content may be provided to the user terminal 300.

FIG. 8 is a diagram illustrating a state in which the expanded content is provided to the user terminal 300 in the advertisement service system for providing an advertisement to the local signage 200 and the user terminal 300 by using the signage content and the expanded content according to an embodiment of the present disclosure. As shown in FIG. 8, in the second advertising module 140 of the advertisement service system for providing an advertisement to the local signage 200 and the user terminal 300 by using the signage content and the expanded content according to the embodiment of the present disclosure, when the advertisement request receiving part 141 receives, from the user terminal 300, an advertisement request together with location information "location 2" and a search keyword "famous restaurant", the content search part 142 searches for the signage content to which tags corresponding to "location 2" and "famous restaurant" are attached, and the advertisement providing part 143 may provide the user terminal 300 with the expanded content including the found signage content.

The advertisement request analysis part 144 may analyze the advertisement request of the user terminal 300 received by the advertisement request receiving part 141. The advertisement request analysis part 144 may use text mining, natural language processing, or the like to analyze the advertisement request received from the user, and may determine the user's needs through the analysis.

The advertisement providing part 143 may provide an analysis result of the advertisement request analysis part 144 to the content expansion module 130, and may request the content expansion module 130 to construct the expanded content that includes the signage content found by the content search part 142 as representative content and further includes the additional content according to the analysis result, and may receive the expanded content constructed according to the request from the content expansion module 130, and may provide the expanded content to the user terminal 300. That is, through the advertisement request analysis part 144 and the content expansion module 130, the expanded content optimized for the user's needs determined by the advertisement request analysis part 144 is constructed and provided to the user, thereby increasing the user's satisfaction and constructing an advertisement in real time according to the user's request and providing the advertisement quickly.

According to an embodiment, the advertisement request analysis part 144 may store and integrate analysis results of analyzing advertisement requests of many users to analyze an advertisement request trend of the users, and may transmit the analyzed advertisement request trend to the content expansion module 130 to request construction of the expanded content corresponding to the advertisement request trend.

The priority setting part 145 may set priorities of respective pieces of the expanded content that includes the signage content found by the content search part 142 as representative content. Herein, the priority setting part 145 may use the location tag of the signage content included in the expanded content and the location information received from the user terminal 300 to set the priorities of the respective pieces of the expanded content in ascending order or descending order of distance. The advertisement providing part 143 may arrange the pieces of the expanded content according to the priorities set by the priority setting part 145 and may provide the pieces of the expanded content to the user terminal 300.

As described above, according to the advertisement service system, proposed in the present disclosure, for providing an advertisement to the local signage 200 and the user terminal 300 by using the signage content and the expanded content, the expanded content resulting from expansion for the user terminal 300 is constructed by adding the additional content to the signage content, and the signage content is provided to the local signage 200 and the expanded content is provided to the user terminal 300. Accordingly, already produced signage content is used, so the use of the signage content produced at a high cost can be expanded, and providing the expanded content appropriate for the user terminal 300 can appeal to the user and increase advertising effects. Furthermore, even after an advertising period with respect to the local signage 200 ends, continuous advertising effects can be obtained using the expanded content.

Various modifications or applications of the above-described present disclosure may be made by those skilled in the art to which the present disclosure belongs, and the scope of the technical idea according to the present disclosure should be defined by the following claims.

## Claims

1. An advertisement service system for providing an advertisement to a local signage (200) and a user terminal (300) by using signage content and expanded content, the system comprising:
a service providing server (100) configured to provide the advertisement to the local signage (200) and the user terminal (300),
wherein the service providing server (100) comprises:
a database module (110) configured to store therein the signage content produced for the signage to be displayed as the advertisement on the local signage (200);
a first advertising module (120) configured to provide the signage content stored in the database module (110) to the local signage (200);
a content expansion module (130) configured to construct the expanded content resulting from expansion for the user terminal (300), the expanded content including the signage content and further including additional content; and
a second advertising module (140) configured to provide the user terminal (300) with the expanded content constructed by the content expansion module (130), corresponding to an advertisement request of the user terminal (300),
wherein the content expansion module(130) is configured to
convert a size or a format or both of the signage content to provide the signage content to the user terminal (300), and construct the expanded content that includes representative content and the additional content, by using the signage content resulting from conversion as the representative content and by further adding the additional content that includes at least one selected from a group of text, an image, a video, sound, and haptic feedback associated with the signage content, and construct at least one piece of the expanded content by using one piece of the signage content according to a matter or a type of the additional content,
wherein the second advertising module (140) comprises:
an advertisement request receiving part (141) configured to receive, from the user terminal (300), the advertisement request together with location information and a search keyword;
a content search part (142) configured to use the location information and the search keyword received by the advertisement request receiving part (141) to search the database module (110) for the signage content matched to the location information and the search keyword;
an advertisement providing part (143) configured to provide the user terminal (300) with the expanded content including the signage content found by the content search part (142); and
an advertisement request analysis part (144) configured to analyze the advertisement request of the user terminal (300) received by the advertisement request receiving part (141),
wherein the advertisement providing part (143) is configured to
provide an analysis result of the advertisement request analysis part (144) to the content expansion module (130), and request the content expansion module (130) to construct the expanded content that includes the signage content found by the content search part (142) as the representative content and further includes the additional content according to the analysis result, and receive, from the content expansion module (130), the expanded content constructed according to the request and provide the expanded content to the user terminal (300), and
wherein the advertisement request analysis part (144) is configured to store and integrate a plurality of the analysis results of analyzing a plurality of the advertisement requests of users to analyze an advertisement request trend, and transmit the analyzed advertisement request trend to the content expansion module (130) to request construction of the expanded content corresponding to the advertisement request trend.

2. The system of claim 1, wherein the database module (110) is configured to
set and store therein a location of the local signage (200) on which the signage content is to be displayed, a place name, and a keyword as tags in the signage content.

3. The system of claim 1, wherein the second advertising module (140) further comprises:
a priority setting part (145) configured to set priorities of the respective pieces of the expanded content that includes the signage content found by the content search part (142) as the representative content, and
wherein the advertisement providing part (143) is configured to
arrange the pieces of the expanded content according to the priorities set by the priority setting part (145), and provide the pieces of the expanded content to the user terminal (300).
